# FASCICULE DE BREVET EUROPEEN

(11) **EP 3 241 003 B1**
(45) Date de publication et mention de la délivrance du brevet: **10.04.2019**
(21) Numéro de dépôt: 15817886.3
(22) Date de dépôt: 28.12.2015
(51) Int. Cl.: G01K 1/08, G01K 1/14, G01K 7/02

(54) **CANNE DE MESURE DE TEMPERATURE, AVEC UN THERMOCOUPLE FACILEMENT REMPLACABLE**
TEMPERATURMESSSTAB MIT LEICHT AUSTAUSCHBAREM THERMOELEMENT
TEMPERATURE-MEASURING STICK WITH AN EASILY REPLACEABLE THERMOCOUPLE

(30) Priorité: 31.12.2014 FR 1463479
(43) Date de publication de la demande: 08.11.2017
(73) Titulaire: Orano Cycle, 92400 Courbevoie (FR)
(72) Inventeur: SAILLARD, Jean, 50690 Couville (FR)
(74) Mandataire: Brevalex
(86) Numéro de dépôt international: PCT/EP2015/081275
(87) Numéro de publication internationale: WO 2016/107838

(56) Documents cités:
- FR-A- 1 510 548
- US-A- 5 181 779
- US-A1- 2006 185 450

## Description

La présente invention concerne une canne de mesure de température, dont le thermocouple est facilement remplaçable.

Cette canne se rapporte au même domaine technique que le brevet français 2 894 024, qu'elle peut d'ailleurs perfectionner, quoiqu'elle puisse tout aussi bien s'appliquer à des cannes de mesure de réalisations différentes.

Les cannes de mesure de température dont il est question ici servent généralement à mesurer les températures de bains fondus à haute température dans des creusets chauffés par induction électrique, par exemple pour vitrifier des déchets radioactifs. Elles comprennent une enveloppe dans laquelle s'étend le thermocouple depuis un embout de mesure, et l'extrémité opposée de l'enveloppe et du thermocouple sort du creuset pour aboutir dans le milieu extérieur. On s'intéresse ici au remplacement du thermocouple sans devoir démonter la canne de mesure, en recourant si nécessaire à des opérations par des bras de télémanipulation, ce qui est souvent nécessaire quand l'environnement est radioactif et se trouve enclos dans une cellule de protection. Les thermocouples constituent en effet un équipement fragile qui doit parfois être remplacé. Toutefois, ils sont aussi délicats à bien manipuler, à cause de leur grande longueur et de leur faible rigidité et de l'exiguïté de leur logement dans la canne ; or les télémanipulateurs ont l'inconvénient d'avoir une faible dextérité.

L'art antérieur connu comprend les documents US 5 181779 A, FR 1 510 548 A et US 2006/185450 A1. Le premier décrit une canne de mesure de température dont l'enveloppe extérieure, en céramique couverte d'un revêtement de protection pouvant être en fibres de verre, fibres de céramique ou mélange de poudre réfractaire et poudre de verre, contient une gaine également en céramique, dont la fonction est de protéger l'élément intérieur, comprenant le thermocouple, de gaz réducteurs produits par l'oxydation de l'enveloppe. Le tube contenant le thermocouple est rigide puisqu'il est en céramique, notamment en alumine puisque pure, et la gaine n'est pas considérée comme une gaine de glissement du tube ; il n'y a enfin pas d'orifice conique à l'entrée de la gaine de glissement, apte à faciliter l'introduction du tube dans la gaine.

Le deuxième document décrit une canne de mesure de température dont l'extrémité est démontable et unie au reste de la canne par un moyeu de verrouillage. Cette extrémité contient une extrémité du thermocouple. Le document ne divulgue donc pas de moyeu de verrouillage entre la structure de la canne et la gaine porteuse du thermocouple, de façon à faciliter le remplacement de ce dernier.

Le troisième document décrit une canne de mesure de température insérée dans une double paroi. Un orifice conique est présent, mais il ne sert pas à faciliter l'introduction de la canne dans une gaine, mais à limiter l'enfoncement de la canne par un arrêt de vissage de celle-ci sur l'orifice.

L'objet de l'invention est une canne de mesure de température, remarquable en ce qu'elle permet des remplacements aisés du thermocouple même par un outil télémanipulateur dont les possibilités de mouvement et la précision sont réduites. La solution de ce problème technique est assurée par la combinaison des moyens suivants : le thermocouple est logé dans un câble souple, et l'enveloppe classique de la canne contient une gaine concentrique, dans laquelle le câble peut glisser sans plier à l'excès quand il est descendu ; l'enveloppe est jointe à une interface conique, s'évasant vers l'extérieur, qui permet d'introduire commodément le câble dans l'enveloppe ; et un dispositif de verrouillage est prévu entre une pièce solidaire du câble et l'interface.

Aucun des documents antérieurs connus, même pris en combinaison, ne permet de résoudre ce problème technique.

Pour résumer et sous une forme générale, l'invention est relative à une canne de mesure de température, comprenant une enveloppe, un compartiment longitudinal, contenu dans l'enveloppe entre une interface avec un milieu extérieur et un embout de mesure appartenant à l'enveloppe, et un thermocouple logé dans le compartiment, caractérisée en ce que le thermocouple comprend un câble souple formant une enveloppe extérieure du thermocouple, le compartiment est délimité par une gaine de glissement du câble, l'interface comprend un orifice conique d'introduction du câble, menant au compartiment et s'amenuisant vers ledit compartiment, et le thermocouple comprend une pièce verrouillable sur l'interface.

Le thermocouple se présente sous forme d'un module comprenant un câble protégeant les fils et la jonction du thermocouple, et lui permettant de glisser sans risque d'enchevêtrement dans le compartiment longitudinal délimité par l'enveloppe. Ce compartiment étant désormais muni d'une gaine facilitant le glissement du câble, le câble peut être descendu sans risque de dommage ou de déformation jusqu'à l'embout, après quoi la pièce à l'extrémité opposée du thermocouple peut être verrouillée sur la canne, par exemple par un petit mouvement de rotation.

Afin d'assurer que le thermocouple soit bien en contact avec la matière de l'embout et puisse ainsi effectuer des mesures sans biais, le thermocouple comprend avantageusement un ressort s'étendant entre une surface d'appui sur le câble et une surface d'appui sur la pièce de verrouillage. Quand le thermocouple est complètement descendu dans le compartiment, la longueur du câble est suffisante pour que le bout du thermocouple arrive au fond de l'embout, et que le câble exerce alors une compression du ressort ; cette compression maintient le contact du thermocouple.

La gaine peut être en matière souple et être alors sertie sur un manchon isolant thermique, appartenant à l'embout, ou sur l'orifice conique qui facilite l'introduction du thermocouple. Dans d'autres modes de réalisation, la gaine peut être en une matière rigide isolante thermique. Si la canne est coudée et que la gaine l'est aussi, cette dernière peut être divisée en segments à l'endroit du coude.

L'invention sera maintenant décrite en détail sous ses différents aspects, caractéristiques et avantages, au moyen des figures suivantes :
- la figure 1 est une représentation schématique d'un creuset équipé de la canne de mesure ;
- la figure 2 illustre schématiquement la canne ;
- la figure 3 représente la région de l'embout de la canne ;
- la figure 4, la région de connexion entre la canne et le thermocouple ;
- la figure 5, une région coudée de la canne ;
- et la figure 6, la même région selon un autre mode de réalisation.

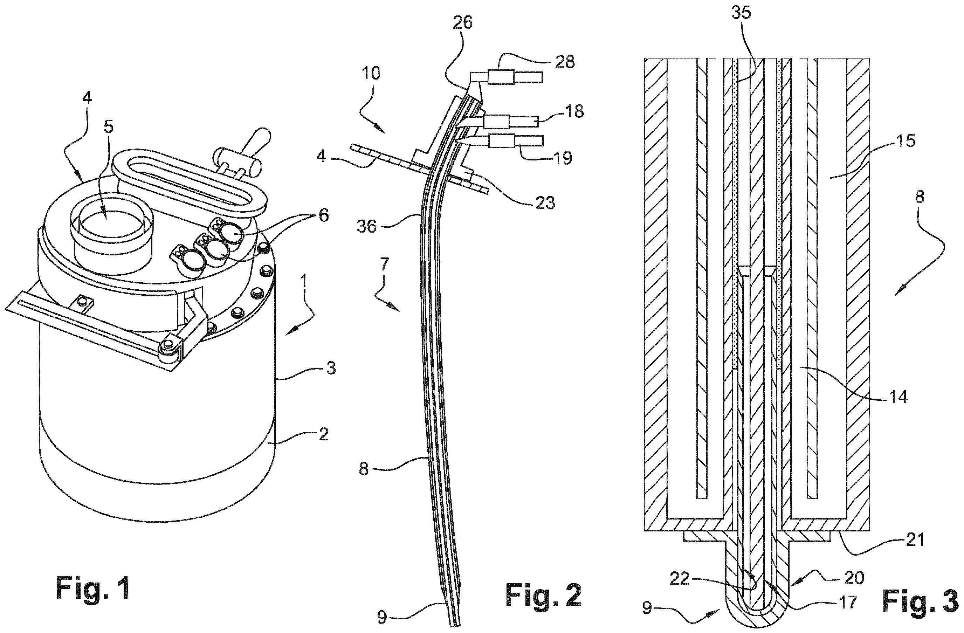

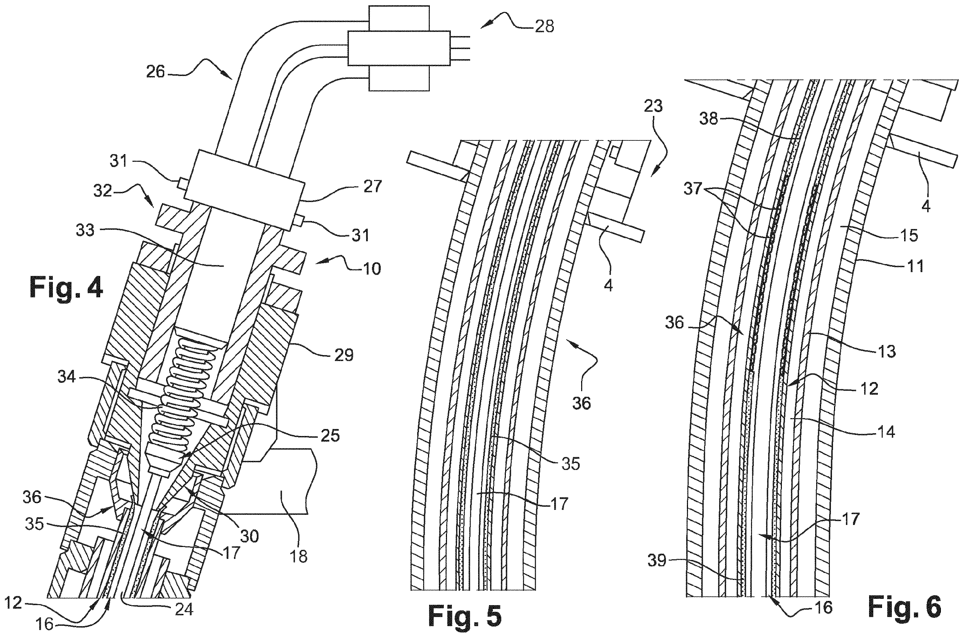

La figure 1 représente schématiquement un creuset 1 de fusion par induction. Il comprend essentiellement une sole 2 inférieure, une virole 3 cylindrique, et un dôme 4 servant de couvercle. On n'a pas représenté ici les inducteurs entourant la virole 3 et exerçant le chauffage de sa charge, pas plus que d'autres particularités de construction déjà connues et qui ne sont pas modifiées par l'invention, comme la division de la virole 3 en secteurs, afin d'arrêter les courants induits, ou les canaux de refroidissement internes. Le dôme 4 comprend notamment une ouverture 5 d'introduction de la charge à vitrifier ou d'additifs et des perçages 6, livrant passage à des équipements notamment de mesure, et en particulier à au moins une canne 7 de mesure de température, décrite aux figures suivantes. Une canne 7 comprend (figure 2) un fût 8 raccordé à un embout 9 à une extrémité libre et à une partie de connexion 10 à une extrémité opposée, cette partie de connexion 10 servant d'interface avec un milieu extérieur au creuset 1, un circuit de renouvellement du fluide de refroidissement et des appareils de suivi des mesures du thermocouple. Comme visible sur la figure 6, le fût 8 comprend une enveloppe extérieure 11, une enveloppe intérieure 12 concentrique à la précédente, une enveloppe intermédiaire 13 située entre les deux précédentes, cette enveloppe intermédiaire 13 séparant un conduit d'entrée 14 de fluide de refroidissement et un conduit 15 de sortie de ce fluide, ces conduits étant parcourus successivement en un écoulement à contre-courant. L'enveloppe intérieure 12 délimite un compartiment central 16 recevant un thermocouple 17. Les conduits 14 et 15 communiquent entre eux, en bas du fût 8 près de l'embout 9 (figure 3), mais restent séparés par ailleurs. Ils sont en communication avec une alimentation 18 et une évacuation 19 d'eau de refroidissement, qui appartient à la partie de connexion 10, à l'extérieur du dôme 4. Le compartiment central 16 est un compartiment longitudinal, s'étendant dans la canne 7 depuis la partie de connexion 10 jusqu'à l'embout 9.

L'embout 9 comprend (figure 3) une enveloppe extérieure 20, se raccordant à une plaque de fond 21 du fût 8, et une doublure 22 tubulaire en alumine ou plus généralement en céramique, qui s'étend à l'intérieur de l'enveloppe extérieure 20 et offre une protection thermique au thermocouple 17, dont l'extrémité s'étend dans la doublure 22 et la touche à son extrémité.

La partie de connexion 10 comprend une bride 23 par laquelle la canne 7 est fixée au dôme 4 (figure 2).

On va maintenant aborder succinctement la description du thermocouple 17, à l'aide des figures 4 et 5.

Les fils du thermocouple 17 sont enveloppés par un câble 24 souple et lisse, apte à glisser dans le compartiment central 16, et ne sont donc pas représentés. Le câble 24 comprend une collerette 25 qui s'étend dans la partie de connexion 10, traverse ensuite une pièce de verrouillage 26 cylindrique, munie d'une bague 27 extérieure tournante et à laquelle est assujettie une prise 28 pour les fils du thermocouple 17, comme une prise Jupiter (marque déposée). La partie de connexion 10 comprend une pièce d'introduction 29 du thermocouple, munie d'un orifice conique 30 s'amenuisant vers le fût 8 et aligné avec l'entrée de l'enveloppe interne 12. La bague de verrouillage 27 est rainurée et peut s'encliqueter sur des ergots 31 d'un manchon 32 fixé à la pièce d'introduction 29, en faisant coulisser les ergots 31 dans des rainures coudées qu'elle possède. Un doigt cylindrique 33 de centrage est alors ajusté dans l'alésage du manchon 32. La collerette 25 et le doigt cylindrique 33 comportent des faces d'appui opposées, entre lesquelles un ressort 34 est comprimé, le ressort 34 entourant une portion du câble 24. Cette disposition permet de repousser le câble 24 vers le bas de la canne 7, et d'assurer que l'extrémité du thermocouple 17 touche la doublure 22 et mesure effectivement la température atteinte à cet endroit.

L'enveloppe intérieure 12 est tapissée d'une gaine 35 (figure 3), qui forme la paroi du logement central 16. La gaine 35 et la doublure 22 sont serties l'une dans l'autre, et l'autre extrémité de la gaine 35 est sertie entre le bout du cône 30 et un perçage au fond d'un bol 36 joignant l'enveloppe intérieure 13 à l'enveloppe extérieure 12.

Avec cette constitution, le remplacement d'un thermocouple 17 peut s'effectuer de la façon que voici, dans une situation où les abords du creuset 1 seraient inaccessibles pour des raisons de sécurité, et une télémanipulation devrait être employée. Le thermocouple 17 est d'abord suspendu à un cordage accroché à un palan mobile, le câble 24 étant pendant vers le bas. Un télémanipulateur saisit le câble 24 et le fait entrer dans la canne 7, installée à travers le dôme 4, en le guidant par l'ouverture de la pièce d'introduction 29 et en descendant progressivement le palan. Le bout du câble 24 est guidé par le cône 30 dans le logement central 16, puis jusqu'au fond de la doublure en alumine 22. Le câble 24 raidit le thermocouple 17 et lui permet de glisser le long de la gaine 35 sans qu'il se plie, de sorte que les maladresses du télémanipulateur n'entraînent pas d'effet défavorable, et que le bout du thermocouple 17 arrive bien à la place qui lui est attribuée. La fin du processus consiste à verrouiller la bague 27 de la pièce de verrouillage 26 en comprimant légèrement le ressort 34, puis à connecter la prise 28 du thermocouple 17 pour bénéficier de ses mesures. Le thermocouple 17 est décroché du cordage. L'enlèvement du thermocouple 17 s'effectue par une opération inverse.

La gaine 35 doit à la fois favoriser le glissement du câble 24 pendant son introduction, et constituer un bouclier électrique, tout en résistant à l'entrée de la chaleur environnante. La faculté de bien glisser doit d'autant plus être préservée que la canne 7 peut faire un coude 36 sous le dôme 4 (figure 5), et que le câble 24 frotte donc à cet endroit. La gaine 35 se présentant sous forme d'une membrane souple et continue, composée par exemple d'une tresse de fibres de verre imprégnées de vernis de polyuréthane sans solvant, peut être remplacée par une gaine en alumine, qui possède aussi les propriétés indiquées ci-dessus. La fabrication d'une courbe en alumine serait toutefois difficile et son montage impossible, et c'est pourquoi on peut (figure 6), à l'emplacement du coude 36, utiliser des perles 37 tubulaires, superposées les unes aux autres, entre deux tubes 38 et 39, également en alumine, qui constituent le reste de la gaine s'étendant jusqu'aux extrémités de l'enveloppe intérieure 13, comme pour la réalisation précédente.

La canne 7 équipée de l'invention peut être implantée à plusieurs exemplaires sur le même creuset 1.

## Revendications

1. Canne de mesure de température, comprenant une enveloppe (11, 12), un compartiment (16) longitudinal contenu dans l'enveloppe, entre une interface (10) avec un milieu extérieur et un embout (9) de mesure appartenant à l'enveloppe, et un thermocouple (17) logé dans le compartiment (16), **caractérisée en ce que** le thermocouple comprend un câble (24) souple formant une enveloppe extérieure du thermocouple, le compartiment est délimité par une gaine (35, 36, 37) de glissement du câble, l'interface (10) comprend un orifice conique (30) d'introduction du câble, menant au compartiment et s'amenuisant vers ledit compartiment (16), et le thermocouple (17) comprend une pièce de verrouillage (26), verrouillable sur l'interface.

2. Canne de mesure de température selon la revendication 1, **caractérisée en ce que** le thermocouple comprend un ressort (34) s'étendant entre une surface d'appui (25) sur le câble (24) et une surface d'appui sur la pièce de verrouillage (26), et comprimé entre les surfaces d'appui à un état de verrouillage de la pièce sur l'interface.

3. Canne de mesure de température selon l'une quelconque des revendications 1 ou 2, **caractérisée en ce que** la gaine (35) est sertie sur une doublure (22) isolante thermique appartenant à l'embout (9).

4. Canne de mesure de température selon l'une quelconque des revendications 1 à 3, **caractérisée en ce que** la gaine (35) est sertie sur l'orifice conique (30).

5. Canne de mesure de température selon l'une quelconque des revendications 1 à 4, **caractérisée en ce que** la pièce de verrouillage (26) comprend un doigt cylindrique (33) de centrage, porteur de la surface d'appui sur la pièce de verrouillage, ledit doigt coulissant dans un manchon (32) solidaire de l'enveloppe.

6. Canne de mesure de température selon l'une quelconque des revendications 1 à 5, **caractérisée en ce que** la gaine est en une matière rigide, isolante thermique.

7. Canne de mesure de température selon la revendication 5, **caractérisé en ce que** le logement est coudé ainsi que la gaine, et la gaine (35) est divisée en segments (37), de type perles tubulaires, là où elle est coudée.

8. Canne de mesure de température selon l'une quelconque des revendications 1 à 7, **caractérisée en ce que** l'enveloppe est double et comprend une enveloppe intérieure et une enveloppe extérieure, et des canaux de refroidissement (14, 15) s'étendent entre l'enveloppe intérieure et l'enveloppe extérieure.

9. Canne de mesure de température selon la revendication 6 ou 7, **caractérisée en ce que** la matière de la gaine (36, 37) est de l'alumine.

10. Canne de mesure de température selon l'une quelconque des revendications 1 à 5, **caractérisée en ce que** la gaine est souple et composée d'une tresse de fibres de verre enduites d'un vernis de polyuréthane sans solvant.

## Patentansprüche

1. Temperaturmessstab, umfassend eine Hülle (11, 12), eine in der Hülle enthaltene longitudinale Kammer (16) zwischen einer Grenzfläche (10) zu einer äußeren Umgebung und einem Ansatzstück (9) zur Messung, das zur Hülle gehört, sowie ein Thermoelement (17), das in der Kammer (16) aufgenommen ist, **dadurch gekennzeichnet, dass** das Thermoelement ein flexibles Kabel (24) umfasst, das eine äußere Hülle des Thermoelements bildet, dass die Kammer durch einen Kabelgleitmantel (35, 36, 37) begrenzt ist, dass die Grenzfläche (10) eine konische Öffnung (30) zum Einführen des Kabels umfasst, die zur Kammer führt und in Richtung der Kammer (16) dünner wird, und dass das Thermoelement (17) ein Verriegelungselement (26) umfasst, das an der Grenzfläche verriegelbar ist.

2. Temperaturmessstab nach Anspruch 1, **dadurch gekennzeichnet, dass** das Thermoelement eine Feder (34) umfasst, die sich zwischen einer Anlageoberfläche (25) auf dem Kabel (24) und einer Anlageoberfläche auf dem Verriegelungselement (26) erstreckt und in einem verriegelten Zustand des Elements auf der Grenzfläche zwischen den Anlageoberflächen komprimiert ist.

3. Temperaturmessstab nach einem der Ansprüche 1 oder 2, **dadurch gekennzeichnet, dass** der Mantel (35) auf ein thermisch isolierendes Futter (22) gefalzt ist, das zum Ansatzstück (9) gehört.

4. Temperaturmessstab nach einem der Ansprüche 1 bis 3, **dadurch gekennzeichnet, dass** der Mantel (35) auf die konische Öffnung (30) gefalzt ist.

5. Temperaturmessstab nach einem der Ansprüche 1 bis 4, **dadurch gekennzeichnet, dass** das Verriegelungselement (26) einen zylindrischen Zentrierfinger (33) umfasst, der Träger der Anlageoberfläche auf dem Verriegelungselement ist, wobei der Finger in einer Muffe (32) gleitet, die mit der Hülle verbunden ist.

6. Temperaturmessstab nach einem der Ansprüche 1 bis 5, **dadurch gekennzeichnet, dass** der Mantel aus einem starren, thermisch isolierendem Material ist.

7. Temperaturmessstab nach Anspruch 5, **dadurch gekennzeichnet, dass** die Aufnahme ebenso wie der Mantel gebogen ist, und dass der Mantel (35) dort, wo er gebogen ist, in Segmente (37) vom Typ rohrförmige Perlen unterteilt ist.

8. Temperaturmessstab nach einem der Ansprüche 1 bis 7, **dadurch gekennzeichnet, dass** die Hülle doppelt ist und eine innere Hülle und eine äußere Hülle umfasst, und dass sich Kühlkanäle (14, 15) zwischen der inneren Hülle und der äußeren Hülle erstrecken.

9. Temperaturmessstab nach Anspruch 6 oder 7, **dadurch gekennzeichnet, dass** das Material des Mantels (36, 37) Aluminiumoxid ist.

10. Temperaturmessstab nach einem der Ansprüche 1 bis 5, **dadurch gekennzeichnet, dass** der Mantel flexibel und mit einem Geflecht von Glasfasern gebildet ist, die mit einem Lack aus Polyurethan ohne Lösungsmittel beschichtet sind.

## Claims

1. A temperature-measuring stick, comprising a shell (11, 12), a longitudinal compartment (16) contained in the shell, between an interface (10) with an external medium and a measuring tip (9) belonging to the shell, and a thermocouple (17) housed in the compartment (16), **characterised in that** the thermocouple comprises a flexible cable (24) forming an external shell of the thermocouple, the compartment is delimited by a cable sliding sheath (35, 36, 37), the interface (10) comprises a conical opening (30) for introducing the cable, leading to the compartment and tapering to said compartment (16), and the thermocouple (17) comprises a locking piece (26), lockable to the interface.

2. The temperature-measuring stick according to claim 1, **characterised in that** the thermocouple comprises a spring (34) extending between a bearing surface (25) for bearing against the cable (24) and a bearing surface for bearing against the locking piece (26), and compressed between the bearing surfaces at a locking state of the piece to the interface.

3. The temperature-measuring stick according to any of claims 1 and 2, **characterised in that** the sheath (35) is crimped to a thermally insulating liner (22) belonging to the tip (9).

4. The temperature-measuring stick according to any of claims 1 to 3, **characterised in that** the sheath (35) is crimped to the conical opening (30).

5. The temperature-measuring stick according to any of claims 1 to 4, **characterised in that** the locking piece (26) comprises a cylindrical centring finger (33), carrying the bearing surface for bearing against the locking piece, said finger sliding in a sleeve (32) integral with the shell.

6. The temperature-measuring stick according to any of claims 1 to 5, **characterised in that** the sheath is of a thermally insulating rigid material.

7. The temperature-measuring stick according to claim 5, **characterised in that** the housing is bent as well as the sheath, and the sheath (35) is divided into tubular bead type segments (37), where it is bent.

8. The temperature-measuring stick according to any of claims 1 to 7, **characterised in that** the shell is double and comprises an internal shell and an external shell, and cooling channels (14, 15) extend between the internal shell and the external shell.

9. The temperature-measuring stick according to claim 6 or 7, **characterised in that** the material of the sheath (36, 37) is alumina.

10. The temperature-measuring stick according to any of claims 1 to 5, **characterised in that** the sheath is flexible and comprised of a braid of glass fibres coated with a solvent-free polyurethane varnish.
